# FASCICULE DE BREVET EUROPEEN

(11) **EP 2 106 374 B1**
(45) Date de publication et mention de la délivrance du brevet: **19.03.2014**
(21) Numéro de dépôt: 07870338.6
(22) Date de dépôt: 27.11.2007
(51) Int. Cl.: B65D 85/804, A47J 31/40

(54) **MACHINE DE PREPARATION ET DE DISTRIBUTION AUTOMATIQUE DE BOISSONS**
MASCHINE ZUR AUTOMATISCHEN HERSTELLUNG UND AUSGABE VON GETRÄNKEN
MACHINE FOR AUTOMATICALLY PREPARING AND DISPENSING BEVERAGES

(30) Priorité: 28.11.2006 FR 0610402
(43) Date de publication de la demande: 07.10.2009
(73) Titulaire: Versini, Rolland, 13008 Marseille (FR)
(72) Inventeur: Versini, Rolland, 13008 Marseille (FR)
(86) Numéro de dépôt international: PCT/FR2007/001940
(87) Numéro de publication internationale: WO 2008/071877

(56) Documents cités:
- EP-A- 1 510 160
- EP-A1- 1 295 554
- WO-A-2006/003115
- FR-A- 2 879 175
- GB-A- 2 416 480
- US-A- 2 939 381
- US-A1- 2006 196 364

## Description

### Domaine technique de l'invention.

La présente invention a pour objet une machine de préparation et de distribution automatique de boissons.

L'invention concerne le domaine technique général des machines permettant d'infuser des capsules jetables pour la préparation de boissons, préférentiellement, mais non exclusivement pour la préparation de café, et dont le contenu à infuser reste dans l'emballage. Elle concerne plus particulièrement le domaine technique des machines permettant d'infuser des capsules par injection d'eau sous pression à l'intérieur de ladite capsule.

Une « capsule » est à différencier d'une « dosette » du type décrite dans le document FR 2.879.175 (LUCIANI). La capsule est pourvue d'une enveloppe de conditionnement qui sert de chambre d'infusion. Au contraire, une dosette sert uniquement à amener une quantité prédéterminée de substance à infuser dans une chambre d'infusion spécifique de la machine. Dans le cas où la dosette comporte une enveloppe de conditionnement, celle-ci sert uniquement à protéger la substance à infuser et doit être préalablement déchirée pour en extraire ladite dosette.

### État de la technique.

Les capsules et dosettes jetables sont bien connues de l'art antérieur et notamment décrites dans les documents WO 2004/006740 (SEB), WO 94/01344 (NESTLE), US 2004/0197444 (KRAFT FOOD), US 5.012.629 (KRAFT FOOD), WO 2004/087529 (HAUSBRANDT), EP 1.221.418 (MELITTA HAUSHALTSPRODUKTE), EP 1.295.554 (SGL ITALIA) ou encore EP 0.583.210 (FORNARI).

Les capsules fermées aptes à s'ouvrir par la pression de l'eau injectée sont particulièrement avantageuses car elles permettent d'obtenir des boissons de grande qualité. On connaît en particulier par le document EP 0.554.469 (NESTLE), une capsule destinée à être utilisée dans une machine de préparation automatique de boisson, ladite capsule étant formée par un agrégat compacté d'une substance à infuser emprisonné dans une enveloppe de conditionnement étanche à l'air et à l'eau et ayant la forme d'un tronc de cône. Outre les raisons hygiéniques, le fait d'employer une enveloppe de conditionnement étanche à l'air et à l'eau procure l'avantage de pouvoir stocker les capsules pendant une période relativement longue sans aucune dégradation de la saveur et des arômes de la boisson. Une caractéristique de cette capsule est que l'enveloppe de conditionnement est configurée pour se crever lors de l'injection d'eau sous pression à l'intérieur de ladite capsule. Généralement, l'enveloppe de conditionnement se crève uniquement au niveau d'une zone d'affaiblissement prévue à la base du tronc de cône.

On connaît par les documents EP 0.242.556 (NESTLE), EP 1.295.554 (SGL ITALIA) ou encore US 2002/0023543 (SCHMED) des machines pour la préparation et la distribution automatique de boissons comportant une chambre d'infusion configurée pour recevoir une capsule du type décrite dans le document EP 0.554.469 (NESTLE). La chambre d'infusion est équipée d'un élément pour percer l'enveloppe de conditionnement de la capsule, pénétrer dans ledit agrégat de substance à infuser et injecter de l'eau sous pression à l'intérieur de cette dernière. La chambre d'infusion comporte une zone de crevaison configurée pour crever ou percer localement l'enveloppe de conditionnement, ladite zone de crevaison communiquant avec un dispositif pour récupérer le liquide s'écoulant au travers de la partie percée ou crevée de ladite enveloppe de conditionnement.

Dans ces machines connues de l'art antérieur, la zone de crevaison est disposée à l'opposé de l'élément de perçage. La capsule est ainsi percée à l'une de ses extrémités et crevée à son autre extrémité opposée. La chambre d'infusion a donc deux zones indépendantes, une pour l'injection d'eau sous pression et une autre pour la récupération et l'évacuation de la boisson. Il en résulte que la chambre d'infusion est techniquement complexe à réaliser.

En outre, l'eau sous pression traverse de part en part la capsule, depuis l'extrémité de l'élément de perçage, jusqu'à la partie crevée ou percée de l'enveloppe de conditionnement. En pratique, on peut observer que certaines zones de la capsule échappent à l'injection d'eau. L'infusion de la capsule n'est donc pas optimale.

Le document WO 2006/003115 (SGL ITALIA) décrit une machine conforme aux caractéristiques techniques décrites dans le préambule de la revendication principale, mais qui n'est pas conçue pour recevoir une capsule sphérique.

Egalement, de part sa forme et sa conception, une capsule du type décrite dans le document EP 0.554.469 (NESTLE), doit être mise en place dans la chambre d'infusion dans une position spécifique. En effet, l'infusion se fait par l'intermédiaire d'un dispositif de perçage configuré pour percer le sommet du tronc de cône et injecter de l'eau sous pression. Sous l'effet de la pression, la zone d'affaiblissement disposée à la base du tronc de cône éclate et l'eau s'infuse au travers de la capsule vers un conduit de récupération de la substance infusée.

L'inconvénient majeur de ce type de capsules est qu'elles doivent être obligatoirement positionnées de manière à ce que le sommet du tronc de cône soit en vis-à-vis du dispositif de perçage et que la zone d'affaiblissement à la base du tronc de cône soit en vis-à-vis du conduit de récupération de la substance infusée, au risque de dégrader la machine. De ce fait, il est nécessaire de prévoir des moyens pour forcer le positionnement de la capsule dans la chambre d'infusion. La conception de la machine devient complexe et il n'est pas possible de prévoir une machine équipée d'un réservoir où les capsules seraient stockées en vrac et amenées automatiquement vers la chambre d'infusion.

A ce Jour, du fait de cet état des choses, les machines utilisant de telles capsules ne peuvent pas distribuer automatiquement plusieurs boissons à la suite, ce qui les rend inulilisables dans des commerces de débit de boissons, dans des collectivités, dans les entreprises ou dans tous autres lieux où un grand nombre de boissons doivent être préparées quotidiennement. En effet, chaque capsule doit être positionnée manuellement dans la chambre d'infusion.

Face aux inconvénients de l'art antérieur, le problème technique principal que vise à résoudre l'invention est de proposer une machine pour la préparation et la distribution automatique de boissons du type décrite précédemment mais dont la chambre d'infusion est de conception plus simple et permet d'optimiser l'infusion de la capsule de sorte qu'aucune zone de cette dernière ne puisse échapper à l'injection d'eau.

Un autre but de l'invention est de proposer une machine capable de préparer une boisson quelle que soit la position de la capsule dans la chambre d'infusion.

L'invention a encore pour but de proposer une machine pour la préparation et la distribution automatique de boissons de conception simple, peu onéreuse, facile d'utilisation et convenant aussi bien à un usage personnel qu'à un usage professionnel où un nombre important de boissons doit être réalisé quotidiennement.

### Divulgation de l'invention.

La solution proposée par l'invention est une machine du type décrit dans les documents EP 0.242.556 (NESTLE), EP 1.295.554 (SGL ITALIA) ou encore US 2002/0023543 (SCHMED), ou encore WO 2006/003115 (SGL ITALIA) et dont les caractéristiques remarquables sont décrites dans la partie caractérisante de la revendication principale.

De plus, l'eau est injectée vers la partie de la capsule opposée à la zone de crevaison de manière à pouvoir se répartir uniformément dans toute ladite capsule. L'infusion est donc optimisée car aucune zone de la capsule ne peut échapper à l'injection d'eau.

Le document FR 2.879.175 (LUCIANI) décrit une machine automatique de préparation et de distribution de boissons classique comportant une chambre d'infusion et deux pistons :
- un premier piston pour tasser la dose de café moulu amenée par la dosette et injectée de l'eau sur ladite dose
- et, à l'opposé du premier piston, un second piston pour l'infusion de la boisson.

La dosette est écrasée par le piston de tassement dans la chambre d'infusion de manière à former une galette de café qui sera infusée. L'infusion est réalisée à l'intérieur de la chambre d'infusion et non pas à l'intérieur de la dosette car cette dernière est littéralement éclatée par le piston.

L'eau chaude est distribuée par le premier piston, puis traverse la dose de café (dosette éclatée). La boisson infusée est ensuite récupérée par le second piston.

La machine décrite dans le document FR 2.879.175 (LUCIANI), n'est pas configurée pour recevoir une capsule du type décrite dans le document EP 0.554.469 (NESTLE), la chambre d'infusion ne comportant aucun élément pour percer ladite capsule et injecter de l'eau sous pression à l'intérieur de cette dernière. De plus, aucune zone permettant de crever ou percer localement la capsule n'est prévue.

### Présentation des dessins.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique en coupe d'une capsule
- les figures 2a à 2e représentent schématiquement un premier mode de réalisation de la machine objet de l'invention dans différentes positions de fonctionnement,
- la figure 3 est une vue schématique agrandie de la chambre d'infusion de la machine représentée sur les figures 2a à 2e,
- la figure 4 est une vue de face de l'élément de perçage seule représentée à la figure 3,
- la figure 5 est une vue schématique agrandie de la chambre d'infusion dans une variante de réalisation de la machine représentée sur les figures 2a à 2e,
- la figure 6 est une vue de face de l'élément de perçage seule représentée à la figure 5,

### Modes de réalisation de l'invention.

La capsule 1 est destinée à être utilisée dans une machine de préparation et de distribution automatique de boisson du type comportant un dispositif pour percer ladite capsule et injecter de l'eau sous pression à l'intérieur de cette dernière. De telles machines sont par exemple décrites dans les documents EP 0.242.556 (NESTLE) ou EP 1.295.554 (SGL ITALIA).

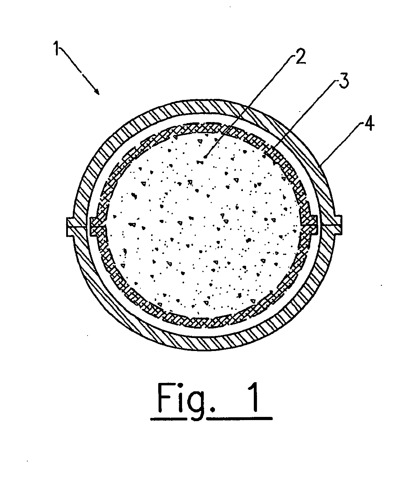

En se rapportant à la figure 1, la capsule 1 est formée par un agrégat compacté d'une substance à infuser 2 emprisonnée dans une enveloppe filtrante 3 et dans une enveloppe de conditionnement extérieure 4. La présence de l'enveloppe filtrante 3 n'est pas essentielle au fonctionnement de la capsule. La substance à infuser 2 est préférentiellement du café, mais peut être du thé, du lait en poudre, du chocolat en poudre, de la soupe, etc.

En se rapportant à la figure 1, l'enveloppe filtrante 3 est positionnée entre l'agrégat compacté de la substance à infuser 2 et l'enveloppe de conditionnement 4. Cette enveloppe filtrante 3 permet de filtrer la substance à infuser 2 quel que soit le positionnement de la capsule 1 dans la chambre d'infusion de la machine et quelle que soit la partie crevée de la capsule. De plus, l'enveloppe filtrante 3 peut jouer le rôle de barrière contre certaines agressions chimiques dues au matériau constitutif de l'enveloppe de conditionnement 4.

L'enveloppe filtrante 3 est avantageusement constituée d'un matériau poreux tissé ou non tissé, comprenant des fibres naturelles et/ou synthétiques. On pourra par exemple employer du papier ou du tissu filtrant du type employé dans la fabrication des sachets de thé.

Le volume de la capsule 1 dépend de la machine et de la substance à infuser 2. En pratique, lorsqu'elle contient du café, le diamètre de la capsule 1 est avantageusement compris entre 20 mm et 40 mm. Elle contient préférentiellement entre 5 g et 15 g de café tassé de manière à avoir une densité comprise entre 0.6 et 0.75 kg/dm³.

L'enveloppe de conditionnement 4 est étanche à l'air et à l'eau et présente une forme externe sensiblement sphérique pouvant être percée substantiellement sur n'importe quelle partie de sa surface. Préférentiellement, l'enveloppe de conditionnement 4 est configurée pour se crever sous l'effet de la pression substantiellement sur n'importe quelle partie de sa surface lors de l'injection d'eau dans la capsule 1. Le résultat atteint est que la capsule 1 peut être percée par le dispositif de perçage de la machine et peut se crever, quelle que soit sa position dans la chambre d'infusion. Un résultat similaire peut être obtenu avec une capsule dont l'enveloppe de conditionnement 4 présente une forme externe sensiblement cubique.

On entend par « *substantiellement* », le fait que certaines parties de la capsule telles que la zone réservée à une marque de fabrique, ou, comme décrit plus loin, les zones de scellement des deux demie-coquilles constitutives de ladite capsule, peuvent ne pas être parfaitement percer ou se crever compte tenue des éventuelles doubles épaisseurs.

L'enveloppe de conditionnement 4 est avantageusement en aluminium, de 20 µm à 120 µm d'épaisseur. Toutefois, d'autres matériaux étanche à l'air et à l'eau peuvent être employés comme des plastiques souples ou rigides du type polypropylène, polychlorure de vinyle, polyéthylène, plastique alimentaire, etc. Lorsque l'enveloppe de conditionnement 4 est en aluminium, il est avantageux de prévoir une pellicule de film alimentaire disposée sur la surface interne de ladite enveloppe de manière à protéger la substance à infuser contre d'éventuelles agressions chimiques.

Dans une autre variante de réalisation, on peut prévoir d'utiliser initialement une dosette sphérique en papier filtre que l'on trempe dans un bain de caoutchouc alimentaire. De cette manière, tout en conservant la forme sphérique, on rajoute une couche de caoutchouc alimentaire autour de la couche de papier filtre. Cette couche de caoutchouc forme, après séchage, l'enveloppe de conditionnement étanche à l'air et à l'eau, de manière à obtenir une capsule.

En pratique, la crevaison de la capsule 1 est réalisée par l'action de la pression d'injection au niveau d'une zone de crevaison agencée dans la chambre d'infusion de la machine. Les capsules connues de l'art antérieur et en particulier celles décrites dans le document EP 0.554.469 (NESTLE), comportent une enveloppe de conditionnement qui se crève uniquement au niveau d'une zone d'affaiblissement spécifiquement prévue sur la surface de ladite enveloppe. La capsule se différencie par le fait que son enveloppe de conditionnement est configurée pour se crever substantiellement sur n'importe quelle partie de sa surface lorsque de l'eau est injectée dans ladite capsule sous une pression de 5 à 20 bar.

La pression à laquelle est infusée la boisson détermine la qualité de cette dernière. En pratique, plus la pression est élevée, plus la boisson infusée est de qualité. Il est possible de jouer sur l'épaisseur de l'enveloppe de conditionnement 4 pour obtenir différents types de capsules associées à différentes qualités de boisson.

On pourra par exemple prévoir un premier type de capsule ayant une enveloppe de conditionnement de faible épaisseur (par exemple 20 µm) destinée à se crever sous une faible pression (par exemple 5 bar) et susceptible de générer une boisson de qualité convenable. On obtiendra par exemple une boisson à base de café du type pour petit-déjeuner à l'américaine, c'est-à-dire dont le café est beaucoup moins travaillé qu'un expresso mais en conservant la technique dite « expresso ».

On pourra également prévoir un second type de capsule ayant une enveloppe de conditionnement d'épaisseur intermédiaire (par exemple 50 µm) destinée à se crever sous une pression moyenne (par exemple 10 bar) et susceptible de générer une boisson de qualité supérieure, type « expresso à la française ».

On pourra enfin prévoir un troisième type de capsule ayant une enveloppe de conditionnement de forte épaisseur (par exemple 120 µm) destinée à se crever sous une pression élevée (par exemple 20 bar) et susceptible de générer une boisson de haute qualité, avec un café très travaillé, type « expresso à l'italienne » (plus fort que « l'expresso à la française »).

Le procédé de fabrication de la capsule 1 sphérique est bien connu de l'homme du métier et par exemple décrit dans le document FR 2.879.175 (LUCIANI).

L'enveloppe filtrante 3 est avantageusement formée par deux demi-enveloppes de matériau filtrant scellées l'une à l'autre le long de leur rebord périphérique de manière à ce qu'elles ne puissent pas se rompre lors de l'injection d'eau sous pression dans ladite capsule. De même, l'enveloppe de conditionnement 4 est avantageusement formée par deux demi-enveloppes de matériau étanche à l'air et à l'eau scellées l'une à l'autre le long de leur rebord périphérique de manière à ce qu'elles puissent être crevées et éventuellement se crever lors de l'injection d'eau sous pression dans ladite capsule. Dans une variante de réalisation, les deux demi-enveloppes de l'enveloppe de conditionnement 4 sont soudées l'une à l'autre par ultrason. Dans une autre variante de réalisation, elles sont scellées l'une à l'autre par insertion et encliquetage de leur rebord l'un sur l'autre de la même façon que certaines gélules médicamenteuses.

Le procédé pour préparer une boisson à partir de la capsule 1 précédemment décrite est alors très simple. Il suffit de percer l'enveloppe de conditionnement 4 de la capsule 1 et injecter de l'eau sous pression à l'intérieur de ladite capsule de manière à infuser la substance 2 contenue dans cette dernière. On récupère alors la boisson s'écoulant au travers de la partie de l'enveloppe de conditionnement 4 qui a été crevée sous l'effet de la pression d'injection de l'eau ou qui a été préalablement percée.

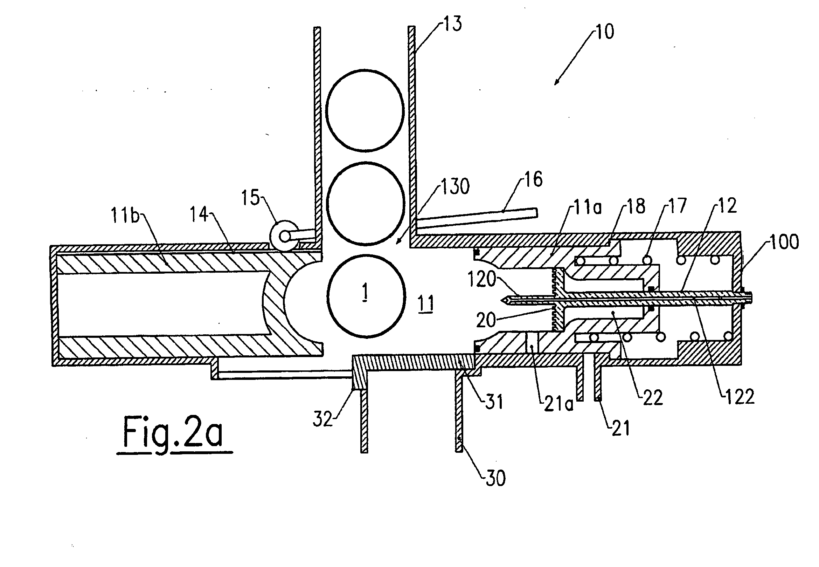

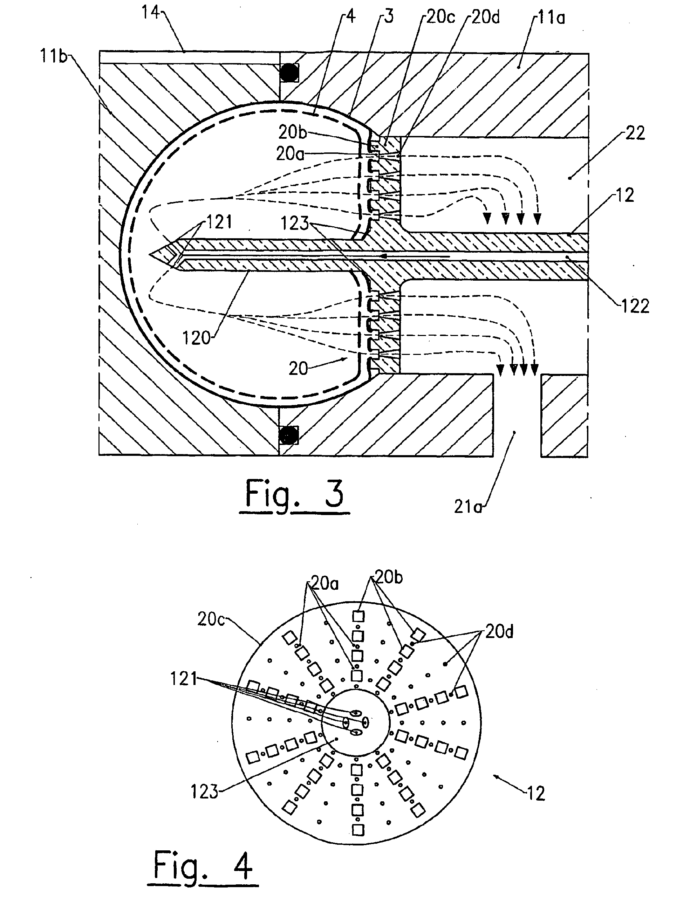

Un mode de réalisation d'une machine permettant de mettre en oeuvre ce procédé va maintenant être décrit plus en détail en se rapportant aux figures 2a à 2e et aux figures 3 à 6.

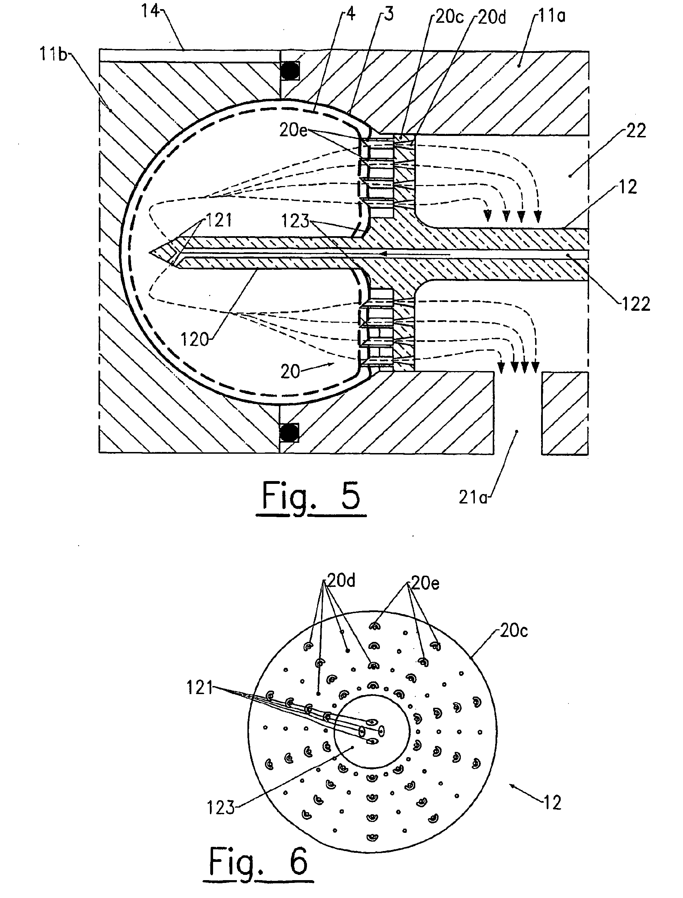

En se rapportant aux figures 2a à 2e, la machine 10 comporte une chambre d'infusion 11 configurée pour recevoir une capsule 1 sphérique du type décrit précédemment. Des capsules sphériques comportant une enveloppe de conditionnement 4 qui n'est pas apte à se crever lors de l'injection de l'eau sous pression peuvent également être utilisées. Ce mode de réalisation est notamment explicité plus après dans la description et sur la figure 5.

La chambre d'infusion 11 est équipée d'un élément 12 pour percer l'enveloppe de conditionnement 4 de la capsule 1 et injecter de l'eau sous pression à l'intérieur de cette dernière.

Un réservoir 13 contenant plusieurs capsules 1 en vrac peut être aménagé de manière à communiquer avec la chambre d'infusion 11.

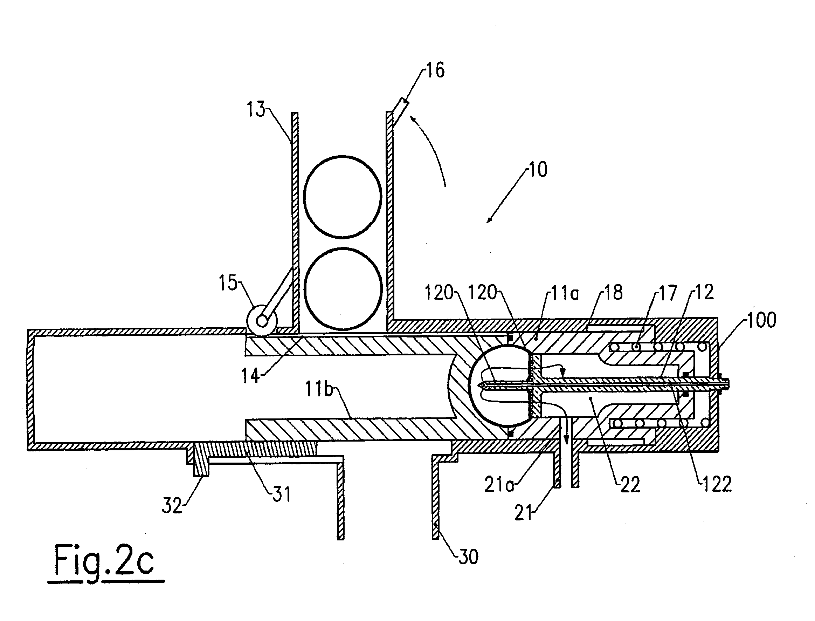

Selon un mode préféré de réalisation, la chambre d'infusion 11 est formée par des culasses 11 a, 11 b montées mobiles dans le bâti 100 de la machine 10, entre :
- une position de chargement (figure 2a) permettant la mise en place de la capsule 1 au niveau de la chambre d'infusion 11,
- et une position de fermeture (figure 2c) où les culasses 11a, 11b s'agencent entre elles de manière à emprisonner la capsule 1.

Les culasses 11 a, 11 b sont avantageusement obtenues par moulage plastique, mais tout autre matériau et procédé convenant à l'homme du métier peuvent être employés.

Pour simplifier la conception, on prévoit une culasse avant 11a et une culasse arrière 11b montées mobiles en translation dans le bâti 100. Comme représentées sur les figures annexées, les culasses 11a et 11b présentent des extrémités sensiblement hémisphériques ajustées à la forme et aux dimensions de la capsule 1 sphérique.

Un dispositif d'étanchéité est avantageusement, mais non nécessairement, prévu entre les culasses 11 a, 11 b, de manière à ce que la chambre d'infusion 11 soit parfaitement étanche lors de l'étape d'infusion.

La culasse arrière 11 b comporte avantageusement sur sa surface extérieure une série de crans 14 qui s'engrènent dans une roue dentée 15 fixée au bâti 100. La roue dentée 15 est reliée à un bras de manoeuvre 16. La roue dentée 15 et la série de crans 14 sont agencées de manière à ce que la mise en rotation de ladite roue provoque la mise en translation de la culasse arrière 11 b. Toutefois, la culasse arrière peut être déplacée par tout autre dispositif mécanique convenant à l'homme du métier, tel que vérin, système d'entraînement à courroie, système vis/écrou, etc.

Lorsque les culasses 11a et 11b sont en position de fermeture, la roue dentée 15 est avantageusement bloquée dans une position de verrouillage de manière à éviter que la culasse arrière 11 b ne se déplace lors de l'injection d'eau sous pression dans la capsule 1. Le mécanisme de verrouillage peut comporter un excentrique, un élément d'encliquetage, ou tout autre moyen équivalent convenant à l'homme du métier.

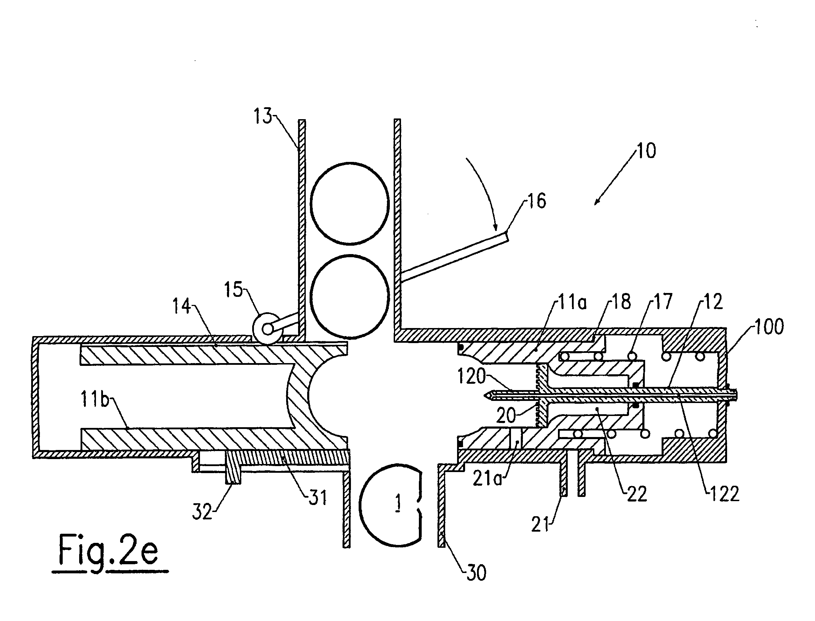

La culasse avant 11a est également montée mobile en translation dans le bâti 100, bien que cela ne soit pas essentiel pour le fonctionnement de la machine 10. La culasse avant 11a est montée mobile entre une position avancée et une position reculée. Au repos (figure 2a), un ressort de compression 17 vient plaquer la culasse avant 11a contre une butée 18 disposée à l'intérieur du bâti 100. Lorsque la culasse arrière 11 b vient au contact de la culasse avant 11a et continue d'avancer, le ressort 17 se comprime et ladite culasse arrière recule (figure 2c) jusqu'à buter sur le fond du bâti 100. Lorsque la culasse arrière 11 b recule, le ressort de compression 17 se détend et revient naturellement plaquer la culasse avant 11a contre la butée 18 (figure 2e).

L'élément de perçage 12 est avantageusement solidaire du bâti 100 de la machine 10. Selon un mode préféré de réalisation représenté sur les figures 2a à 2e et plus particulièrement sur les figures 3 et 5, l'élément de perçage 12 est agencé avec la culasse avant 11a. Il comporte à l'une de ses extrémités une aiguille 120 destinée à pénétrer dans la capsule 1. L'extrémité de l'aiguille 120 est munie d'orifices 121 d'injection d'eau reliés à un conduit d'eau sous pression 122. L'autre extrémité de l'élément de perçage 12 est configurée pour être reliée à une source d'eau chaude. Lors de l'infusion, l'eau chaude est mise sous pression par l'intermédiaire d'une pompe reliée à un réservoir d'eau.

Les orifices 121 sont positionnés de manière à assurer une injection diffuse et uniforme de l'eau dans la substance à infuser 2. En se rapportant plus particulièrement aux figures 3 et 5, l'eau est injectée vers la partie de la capsule 1 opposée à la zone de crevaison 20 de manière à pouvoir se répartir uniformément dans toute ladite capsule. Aucune zone de la capsule 1 n'échappera à l'injection d'eau sous pression.

En se rapportant plus particulièrement aux figures 3 et 5, la longueur de l'aiguille 120 est telle qu'elle ne puisse percer qu'un seul côté de la capsule 1.

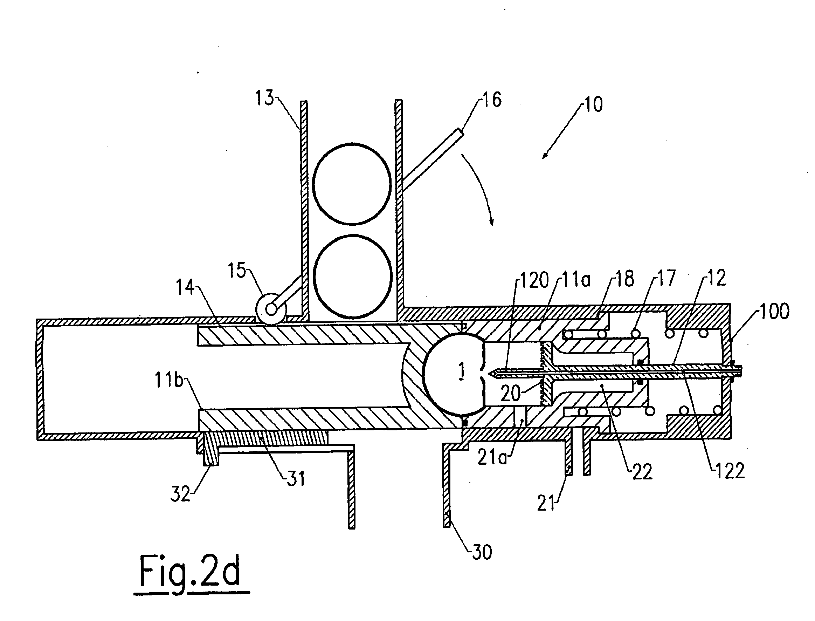

La culasse avant 11a et l'élément de perçage 12 sont agencés de manière à ce que :
- en position reculée, la culasse avant 11a permette l'embrochage de la capsule 1 sur l'aiguille 120 (figure 2c),
- et en position avancée, la culasse avant 11a permette l'extraction de la capsule 1 hors de l'aiguille 120 (figure 2d).

En effet, en position avancée, la culasse avant 11a a tendance à repousser la capsule 1 hors de l'aiguille 120.

Un résultat similaire serait obtenu en prévoyant une culasse avant montée de manière fixe dans le bâti 100 et un élément de perçage 12 monté mobile entre une position avancée où l'aiguille 120 embroche la capsule 1 et une position reculée où elle sort de ladite capsule.

Une étanchéité est avantageusement prévue entre la culasse avant 11a et l'élément de perçage 12.

La surface interne de la chambre d'infusion 11 est aménagée de manière à ce que lors de l'injection d'eau sous pression à l'intérieur de la capsule 1, l'enveloppe de conditionnement 4 de ladite capsule ne puisse être percée ou se crever qu'au niveau d'une zone de crevaison 20 spécialement prévue à cet effet. La zone de crevaison 20 est configurée de manière à communiquer avec un dispositif pour récupérer le liquide s'écoulant au travers de la partie percée ou crevée de l'enveloppe de conditionnement 4. Les autres parties de la surface interne de la chambre d'infusion 11 sont lisses et ajustées aux dimensions de la capsule 1 de sorte que l'enveloppe de conditionnement 4 ne peut se crever ou être percée autre part que dans la zone de crevaison 20.

Selon le mode préféré de réalisation représentée sur les figures annexées, la zone de crevaison 20 est agencée à la base de l'aiguille 120.

En pratique, la zone de crevaison 20 est une extension solidaire de l'aiguille 120, l'élément de perçage 12 muni de ladite aiguille et de ladite zone de crevaison étant réalisé en une seule pièce par moulage plastique.

En se rapportant aux figures annexées, la culasse avant 11 a et l'élément de perçage 12 sont configurés de manière à former, derrière la zone de crevaison 20, une chambre de récupération 22 permettant de récupérer le liquide s'écoulant au travers de l'enveloppe de conditionnement 4. Cette disposition permet d'injecter de l'eau sous pression dans la capsule 1 et de récupérer la boisson s'écoulant de ladite capsule d'un même côté de la machine 10, ce qui permet de simplifier la conception de la machine et de réduire son encombrement.

En se rapportant à un premier mode de réalisation représenté sur les figures 3 et 4, la zone de crevaison 20 comporte une succession de parties creuses 20a et de parties hautes 20b configurées de manière à permettre la crevaison de l'enveloppe de conditionnement 4 de la capsule 1 lors de l'injection de l'eau sous pression. Les parties hautes 20b jouent le rôle de poinçon et affaiblissent l'enveloppe de conditionnement 4 lors de la mise en place de la capsule 1 contre la zone de crevaison 20. Sous l'effet de la pression, la partie de l'enveloppe de conditionnement 4 ainsi affaiblie est alors apte à se crever. Le vide obtenu par la différence de hauteur entre les parties creuses 20a et les parties hautes 20b, permet d'aboutir à la crevaison de l'enveloppe de conditionnement 4 sous l'effet de la pression de l'eau injectée.

En se rapportant plus particulièrement à la figure 4, la zone de crevaison 20 est formée par une grille 20c moulée à la base de l'aiguille 120. La grille 20c comporte des orifices 20d communiquant avec la chambre de récupération 22. Les orifices 20d sont disposés en dessous des parties hautes 20b de manière à pouvoir récupérer plus facilement le liquide infusé. Les orifices 20d ont la forme d'un tronc de cône dont la petite base est disposée du côté de la zone de crevaison 20 et la grande base du côté de la chambre 22. Cette configuration permet d'éviter les phénomènes de bouchage et créée un flux laminaire qui améliore la qualité de la boisson. La petite base des orifices 20d a un diamètre compris entre 0.1 mm et 0.3 mm de manière à retenir les éventuels grains de la substance à infuser 2 pouvant s'échapper de la capsule 1, que cette dernière comporte ou non une enveloppe filtrante 3.

En se rapportant à un second mode de réalisation représenté sur les figures 5 et 6, la zone de crevaison 20 est équipée de moyens 20e pour percer l'enveloppe de conditionnement 4 de la capsule 1. Préférentiellement, les moyens 20e pour percer l'enveloppe de conditionnement 4 sont des aiguilles moulées sur une grille 20c. Toutefois, tout autre moyen de perçage convenant à l'homme du métier peut être employé. Ce mode de réalisation convient particulièrement aux capsules sphériques dont l'enveloppe de conditionnement 4 n'est pas configurée pour se crever lors de l'injection de l'eau sous pression, par exemple lorsque ladite enveloppe de conditionnement est en plastique.

Dans le cas où la capsule 1 comporte une enveloppe filtrante 3, les moyens de perçage 20e sont avantageusement configurés de manière à ne venir percer que l'enveloppe de conditionnement 4 et à laisser intacte ladite enveloppe filtrante. En pratique, on utilise des aiguilles dont la longueur est suffisante pour percer l'enveloppe de conditionnement 4 et éventuellement déformer l'enveloppe filtrante 3, mais insuffisante pour percer cette dernière.

La grille 20c comporte des orifices 20d communiquant avec la chambre de récupération 22. Les orifices 20d ont la forme d'un tronc de cône dont la petite base est disposée du côté de la zone de crevaison 20 et la grande base du côté de la chambre 22. Cette configuration permet d'éviter les phénomènes de bouchage et créée un flux laminaire qui améliore la qualité de la boisson. La petite base des orifices 20d a un diamètre compris entre 0.1 mm et 0.3 mm de manière à retenir les éventuels grains de la substance à infuser 2 pouvant s'échapper de la capsule 1, que cette dernière comporte ou non une enveloppe filtrante 3.

En se rapportant aux figures annexées, la zone de crevaison 20 a une forme générale plane de manière à ce que l'enveloppe de conditionnement 4 soit sensiblement déformée avant l'injection de l'eau sous pression. Cette caractéristique améliore le poinçonnage de l'enveloppe de conditionnement 4 lorsque la zone de crevaison 20 comporte une succession de parties creuses 20a et de parties hautes 20b. Elle optimise également le perçage de l'enveloppe de conditionnement 4 lorsque la zone de crevaison 20 comporte des moyens de perçage 20e.

Dans une variante de réalisation non représentée, la zone de crevaison 20 peut avoir la forme d'une calotte sphérique configurée de manière à épouser substantiellement la forme de la capsule 1.

L'aiguille 120 est avantageusement configurée pour former étanchéité au niveau des bords percés de l'enveloppe de conditionnement 4 et éviter que le liquide infusé ne s'écoule au niveau desdits bords percés. En se rapportant aux figures 3 et 5, l'aiguille 120 comporte préférentiellement une collerette 123 configurée pour que les bords percés de l'enveloppe de conditionnement 4, et éventuellement ceux de l'enveloppe filtrante 3, viennent se plaquer dessus de manière étanche sous l'effet de la pression de l'eau injectée dans la capsule 1.

En se rapportant aux figures 2a à 2e, le réservoir 13 est équipé d'une ouverture 130 permettant d'amener les capsules 1 vers là chambre d'infusion 11. En position d'attente (figure 2a), la culasse arrière 11 b est reculée vers l'arrière du bâti 100 de manière à libérer l'ouverture 130 et charger une capsule.

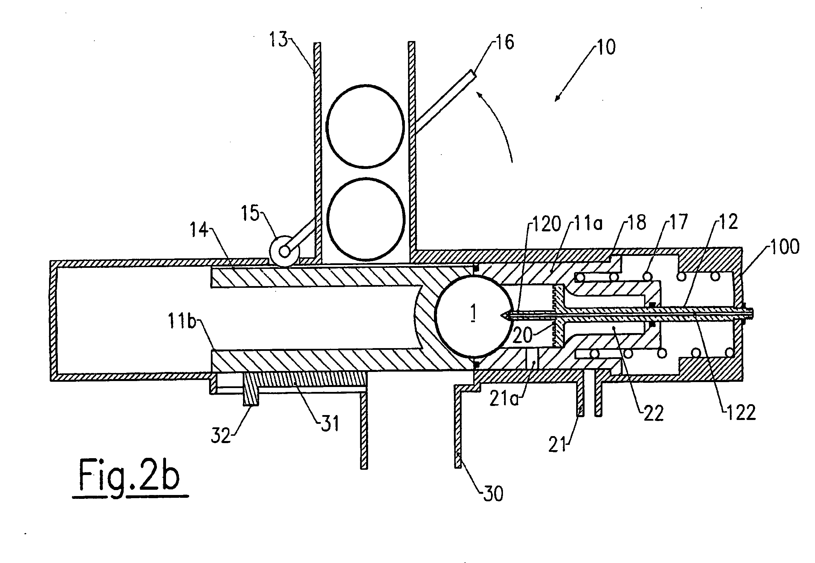

En actionnant le levier 16, la culasse arrière 11 b vient au contact de la culasse avant 11a, entraînant la capsule 1 vers l'aiguille 120 (figure 2b). En continuant à actionner le levier 16, la culasse arrière 11 b repousse la culasse avant 11a et permet à l'aiguille 120 de percer l'enveloppe de conditionnement 4 de la capsule 1 (figure 2c). Le levier 16 est alors verrouillé. Dans cette position, la capsule 1 est parfaitement emprisonnée dans la chambre d'infusion 11 et l'enveloppe de conditionnement 3 vient au contact de la zone de crevaison 20. De l'eau chaude sous pression est alors injectée dans la capsule 1 via les orifices 121 de l'aiguille 120. L'injection d'eau est réalisée sous une pression de 5 à 20 bar. Sous l'effet de la pression, l'enveloppe de conditionnement 4 se perce. Le liquide infusé traverse alors la partie percée de l'enveloppe de conditionnement 4, passe au travers de la grille 20c via les orifices 20d et est récupéré dans la chambre 22. En se rapportant à la figure 2c, la culasse avant 11a comporte un conduit 21 a aménagé de manière à créer une communication entre la chambre de récupération 22 et le conduit 21 lorsque ladite culasse avant est en position reculée. Le liquide contenu dans la chambre de récupération 22 peut donc être amené, via les conduits 21a et 21, vers une tasse, un bol, ou tout autre réceptacle adapté.

Une fois que la boisson est extraite de la capsule 1, le levier 16 est actionné en sens inverse de manière à faire reculer la culasse arrière 11 b (figure 2d). Lors du recul de cette dernière, le ressort 17 se détend et reconduit la culasse avant 11a vers sa position avancée. Cette dernière se déplace en repoussant la capsule 1 hors de l'aiguille 120.

En continuant à actionner le levier 16, la culasse arrière 11 b recule vers sa position d'attente et la capsule 1 usagée tombe dans le conduit d'évacuation 30 (figure 2e). En continuant à actionner le levier 16, la culasse arrière 11b retourne dans sa position de chargement, libère l'ouverture 130 du réservoir 13 et permet le chargement d'une nouvelle capsule dans la chambre d'infusion 11 (figure 2a).

En se rapportant aux figures 2a à 2e, le conduit 30 pour évacuer la capsule usagée est aménagé au niveau du bâti 100 de manière à pouvoir récupérer ladite capsule lorsque la culasse arrière 11b retourne en position d'attente et que ladite capsule est extraite de l'aiguille 120.

Un élément de fermeture 31 agencé sur le bâti 100 est monté mobile entre une position de fermeture condamnant l'accès au conduit 30 et une position d'ouverture autorisant l'accès audit conduit. Le mouvement de l'élément de fermeture 31 est avantageusement synchronisé avec le mouvement de la culasse arrière 11b. Lorsque la culasse arrière 11b est en position d'attente (figure 2a), l'élément de fermeture 31 bouche le conduit 30 de manière à ce que la capsule neuve 1 ne puisse tomber dedans. Lorsque la culasse arrière 11 b avance (figures 2b et 2c), l'élément de fermeture 31 recule vers une position arrière de manière à libérer l'accès au conduit 30. Lorsque la culasse arrière 11 b recule jusqu'à une position où elle bouche partiellement l'ouverture 130 du réservoir 13 de manière à ce qu'aucune capsule ne puisse tomber dans la chambre d'infusion 11, l'élément de fermeture 31 avance jusqu'à une position intermédiaire n'obturant pas le conduit 30 (figure 2e). Dans cette configuration, la capsule usagée peut tomber dans le conduit 30. Lorsque la culasse arrière 11 b continue de reculer vers sa position de chargement, l'élément de fermeture 31 avance et obstrue le conduit 30 (figure 2a).

L'élément de fermeture est mis en mouvement par l'intermédiaire d'un ergot 32 accouplé à un mécanisme relié à la culasse arrière 11 b de manière à synchroniser les mouvements. Toutefois, l'élément de fermeture 31 peut être accouplé à un mécanisme dont le fonctionnement est indépendant du mouvement de la culasse arrière 11 b.

## Revendications

1. Ensemble comprenant une machine pour la préparation et la distribution automatique de boissons comportant une chambre d'infusion (11) configurée pour recevoir une capsule (1) formée par un agrégat compacté d'une substance à Infuser (2) emprisonnée dans une enveloppe de conditionnement (4) étanche à l'air et à l'eau, ladite chambre d'infusion étant équipée d'un élément (12) pour percer ladite enveloppe de conditionnement (4), pénétrer dans ledit agrégat de substance à infuser et injecter de l'eau sous pression à l'intérieur de ladite capsule, ladite chambre d'infusion comportant une zone de crevaison (20) configurée pour crever ou percer localement ladite enveloppe de conditionnement (4), ladite zone de crevaison (20) communiquant avec un dispositif (20d, 21, 21a, 22) pour récupérer le liquide s'écoulant au travers de la partie crevée ou percée de ladite enveloppe de conditionnement (4), que la zone de crevaison (20) étant disposée dans la chambre d'infusion (11) du même côté que l'élément de perçage (12), ladite zone de crevaison étant agencée à la base dudit élément de perçage, solidairement à ce dernier, l'eau étant injectée vers la partie de la capsule (1) opposée à ladite zone de crevaison de manière à pouvoir se répartir uniformément dans toute ladite capsule, **se caractérisant par le fait que** :
la chambre d'infusion (11) est configurée pour recevoir une capsule (1) de forme sphérique, ladite chambre étant formée par une culasse avant (11a) et une culasse arrière (111b) montées mobiles en translation dans le bâti (100) de la machine (10), lesdites culasses présentant des extrémités sensiblement hémisphériques ajustées à la forme et aux dimensions de la capsule.

2. Ensemble selon la revendication précédente, dans lequel la zone de crevaison (20) comporte une succession de parties creuses (20a) et de parties hautes (20b) configurées de manière à permettre la crevaison de l'enveloppe de conditionnement (4) lors de l'injection d'eau sous pression à l'intérieur de la capsule (1), lesdites parties creuses et/ou hautes communiquant avec le dispositif (20d, 21, 21 a, 22) pour récupérer le liquide s'écoulant au travers de ladite enveloppe de conditionnement.

3. Ensemble selon la revendication 1 dans lequel la chambre d'infusion (11) comporte une zone de crevaison (20) équipée de moyens (20e) pour percer l'enveloppe de conditionnement (4) de la capsule (1), lesdits moyens de perçage communiquant avec le dispositif (20d, 21, 21a, 22) pour récupérer le liquide s'écoulant au travers de ladite enveloppe de conditionnement.

4. Ensemble selon la revendication 3, dans lequel les moyens (20e) pour percer l'enveloppe de conditionnement (4) sont des aiguilles moulées sur une grille (20c), ladite grille comportant des orifices (20d) communiquant avec une chambre de récupération du liquide (22).

5. Ensemble selon la revendication 4, dans lequel les orifices (20d) ont la forme d'un tronc de cône dont la petite base est disposée du côté de la zone de crevaison (20) et la grande base du côté de la chambre de récupération (22).

6. Ensemble selon l'une des revendications précédentes, dans lequel l'élément de perçage (12) comporte à l'une de ses extrémités une aiguille (120) apte à percer l'enveloppe de conditionnement (4) de la capsule (1), la partie de ladite aiguille destinée à pénétrer dans ladite capsule comportant des orifices d'injection d'eau (121) reliés à un conduit d'eau sous pression (122).

7. Ensemble selon la revendication 6, dans lequel la zone de crevaison (20) est agencée à la base de l'aiguille (120).

8. Ensemble selon l'une des revendications 6 ou 7 prises en combinaison avec la revendication 3, dans lequel la zone de crevaison (20) est formée par une grille (20c) moulée à la base de l'aiguille (120), ladite grille comportant des orifices (20d) communiquant avec une chambre de récupération du liquide (22), lesdits orifices étant disposés en dessous des parties hautes (20b).

9. Ensemble selon la revendicatlon 8, dans lequel les orifices (20d) ont la forme d'un tronc de cône dont la petite base est disposée du côté de la zone de crevaison (20) et la grande base du côté de la chambre de récupération (22).

10. Ensemble selon l'une des revendications précédentes, dans lequel la chambre d'infusion (11) est formée par une culasse avant (11a) et une culasse arrière (11b), la culasse arrière (11b) étant montée mobile entre une position de chargement permettant la mise en place de la capsule (1) au niveau de ladite chambre d'infusion et une position de fermeture où ladite culasse arrière s'agence avec ladite culasse avant de manière à emprisonner ladite capsule.

11. Ensemble selon la revendication 10 prise en combinaison avec la revendication 8, dans lequel la culasse avant (11a) et l'élément de perçage (12) sont configurés de manière à former, derrière la zone de crevaison (20), une chambre de récupération (22) permettant de récupérer le liquide s'écoulant au travers de l'enveloppe de conditionnement (4).

12. Ensemble selon les revendications 6 ou 7 prises en combinaison avec l'une des revendications 11 ou 12, dans lequel la culasse avant (11a) et l'élément de perçage (12) sont agencés pour être dans une position permettant l'embrochement de la capsule (1) sur l'aiguille (120) et une position permettant l'extraction de ladite capsule hors de ladite aiguille.

13. Ensemble selon l'une des revendications précédentes prises en combinaison avec la revendication 6, dans lequel l'aiguille (120) comporte une collerette (123) configurée pour que les bords percés de l'enveloppe de conditionnement (4) viennent se plaquer dessus de manière étanche sous l'effet de la pression de l'eau injectée dans la capsule (1).

14. Ensemble selon l'une des revendications précédentes, dans lequel la machine comporte un réservoir (13) de stockage de plusieurs capsules équipé d'une ouverture (130) permettant d'amener lesdites capsules vers la chambre d'infusion (11).

15. Ensemble selon l'une des revendications précédentes, dans lequel un conduit (31) pour évacuer les capsules (1) usagées est aménagé au niveau du bâti (100) de manière à pouvoir récupérer lesdites capsules après leur infusion.

16. Ensemble selon la revendication 15 prise en combinaison avec la revendication 10, dans lequel un élément de fermeture (31) est agencé avec le conduit (30) pour évacuer les capsules (1) infusées, ledit élément de fermeture étant monté mobile entre une position de fermeture condamnant l'accès audit conduit et une position d'ouverture autorisant l'accès audit conduit, le mouvement dudit élément de fermeture étant synchronisé avec le mouvement de la culasse arrière (11 b).

## Patentansprüche

1. Eine Maschine für die automatische Zubereitung und Ausgabe von Getränken mit einer Brühkammer (11) zur Aufnahme einer von einer luft- und wasserdichten Umhüllung (4) umschlossenen Kapsel (1) aus einem verdichteten Stoff einer für den Aufguss bestimmten Substanz (2), wobei die besagte Brühkammer ein Aufstechorgan (12) zum Durchstoßen der besagten Umhüllung (4), zum Eindringen in den besagten verdichteten Stoff einer für den Aufguss bestimmten Substanz und zum Einspritzen von Wasser unter Druck ins Innere der besagten Kapsel sowie eine Aufstechzone (20) umfasst, welche so gestaltet ist, dass sie die besagte Umhüllung (4) durchstößt oder durchbricht, und mit einer Vorrichtung (20d, 21, 21a, 22) zum Auffangen des aus der durchstoßenen oder durchbrochenen Stelle der besagten Umhüllung (4) abfließenden Flüssigkeit versehen ist, wobei die Aufstechzone (20) an derselben Seite der Brühkammer (11) wie das Aufstechorgan (12) an der Basis des besagten Aufstechorgans und mit letzterem fest verbunden angebracht ist, und das Wasser an der der besagten Aufstechzone gegenüber liegenden Seite der Kapsel (1) eingespritzt wird, sodass es sich gleichmäßig in der gesamten besagten Kapsel verteilt, **dadurch gekennzeichnet, dass**
die Brühkammer (11) für die Aufnahme einer kugelförmigen Kapsel (1) konfiguriert ist, wobei die besagte Kammer aus einem vorderen (11a) und einem hinteren Gehäuse (11b) gebildet wird, die seitwärts verschiebbar am Gestell (100) der Maschine (10) angebracht sind und im Wesentlichen halbkugelförmig, an die Form und Maße der Kapsel angepasst sind.

2. Maschine nach dem zuvor genannten Anspruch, in welcher die Aufstechzone (20) mit einer Folge hohler (20a) und erhöhter (20b) Teile versehen ist, die derartig konfiguriert sind, dass die Umhüllung (4) beim Einspritzen des Wassers unter Druck in das Innere der Kapsel (1) durchstochen wird, wobei die besagten hohlen und/oder erhöhten Teile mit der Vorrichtung (20d, 21, 21a, 22) zum Auffangen der durch die besagte Umhüllung abfließenden Flüssigkeit kommunizieren.

3. Maschine nach Anspruch 1, in welcher die Brühkammer (11) eine mit Mitteln (20e) zum Durchstechen der Umhüllung (4) der Kapsel (1) versehene Aufstechzone (20) umfasst, wobei die besagten Mittel mit der Vorrichtung (20d, 21, 21a, 22) zum Auffangen der durch die besagte Umhüllung abfließenden Flüssigkeit kommunizieren.

4. Maschine nach Anspruch 3, in welcher die Mittel (20e) zum Durchstechen der Umhüllung (4) aus gegossenen Nadeln auf einem Gitter (20c) bestehen, wobei das Gitter mit Öffnungen (20d) versehen ist, die mit einer Kammer zum Auffangen der Flüssigkeit (22) kommunizieren.

5. Maschine nach Anspruch 4, in welcher die Öffnungen (20d) die Form eines Kegelstumpfes haben, dessen Deckfläche an der Seite der Aufstechzone (20) und dessen Grundfläche an der Seite der Auffangkammer (22) angebracht ist.

6. Maschine nach einem der zuvor genannten Ansprüche, in welcher das Aufstechorgan (12) an einem seiner Enden mit einer zum Durchstechen der Umhüllung (4) der Kapsel (1) geeigneten Nadel (120) versehen ist, die in die besagte Kapsel eindringt und Öffnungen zum Einspritzen von Wasser (121) enthält, die an eine unter Druck stehende Wasserleitung (122) angeschlossen sind.

7. Maschine nach Anspruch 6, in welcher die Aufstechzone (20) an der Basis der Nadel (120) angebracht ist.

8. Maschine nach einem der Ansprüche 6 oder 7 in Verbindung mit Anspruch 3, in welcher die Aufstechzone (20) von einem gegossenen Gitter (20c) an der Basis der Nadel (120) gebildet wird, wobei das besagte Gitter Öffnungen (20d) umfasst, die mit einer Kammer zum Auffangen der Flüssigkeit (22) kommunizieren, wobei die besagten Öffnungen unterhalb der erhöhten Teile (20b) angebracht sind.

9. Maschine nach Anspruch 8, in welcher die Öffnungen (20d) die Form eines Kegelstumpfes haben, dessen Deckfläche an der Seite der Aufstechzone (20) und dessen Grundfläche an der Seite der Auffangkammer (22) angebracht ist.

10. Maschine nach einem der zuvor genannten Ansprüche, in welcher die Brühkammer (11) aus einer vorderen (11a) und einer hinteren Gehäusehälfte (11b) gebildet wird, wobei die hintere Gehäusehälfte (11b) derart vorgesehen ist, dass sie sich zwischen einer Ladeposition zum Einlegen der Kapsel (1) in die besagte Brühkammer und einer Schließposition bewegt, in welcher die besagte hintere Gehäusehälft und die besagte vordere Gehäusehälfte sich derart anordnen, dass die besagte Kapsel umschlossen wird.

11. Maschine nach Anspruch 10 in Verbindung mit Anspruch 8, in welcher die vordere Gehäusehälfte (11a) und das Aufstechorgan (12) so beschaffen sind, dass sie hinter der Aufstechzone (20) eine Auffangkammer (22) für die durch die Umhüllung (4) ablaufende Flüssigkeit bilden.

12. Maschine nach den Ansprüchen 6 und 7 in Verbindung mit einem der Ansprüche 11 oder 12, in welcher die vordere Gehäusehälfte (11a) und das Aufstechorgan (12) so angeordnet sind, dass die Kapsel (1) auf die Nadel (120) aufgespießt werden kann und die über eine Position verfügt, in der die besagte Kapsel von der besagten Nadel abgezogen werden kann.

13. Maschine nach einem der zuvor genannten Ansprüche in Verbindung mit Anspruch 6, in welcher die Nadel (120) mit einem Flansch (123) versehen ist, auf den die durchstoßenen Ränder der Umhüllung (4) sich durch den Druck des in die Kapsel (1) eingespritzten Wassers auf wasserundurchlässige Weise pressen.

14. Maschine nach einem der zuvor genannten Ansprüche, die einen mit einer Öffnung (130) versehenen Vorratsbehälter (13) für mehrere Kapseln umfasst, wobei die Kapseln durch die Öffnung in die Brühkammer (11) gebracht werden.

15. Maschine nach einem der zuvor genannten Ansprüche, in welcher an der Maschine (100) eine Abführpassage (30) zum Entsorgen der gebrauchten Kapseln (1) angebracht ist, sodass die besagten Kapseln nach dem Brühen aufgefangen werden können.

16. Maschine nach Anspruch 15 in Verbindung mit Anspruch 10, in welcher ein Verschlussorgan (31) mit der Abführpassage (30) zum Entsorgen der gebrauchten Kapseln (1) vorgesehen ist, wobei das besagte Verschlussorgan beweglich derart angebracht ist, dass es sich zwischen einer Schließposition, in welcher der Zugriff zu der besagten Abführpassage verhindert wird, und einer Öffnungsposition bewegt, in welcher der Zugriff zu der besagten Abführpassage möglich ist, wobei die Bewegungen des besagten Verschlussorgans mit den Bewegungen der hinteren Gehäusehälfte (11b) synchronisiert sind.

## Claims

1. A machine for the automatic preparation and dispensing of beverages comprising an infusion chamber (11) configured to receive a capsule (1) made up of a compacted aggregate of a substance to be infused (2) held in an air and water-tight packaging envelope, said infusion chamber being equipped with a projection (12) for piercing said packaging envelope (4), to penetrate said aggregate of a substance to be infused and inject pressurized water into said capsule, said infusion chamber containing a puncturing zone (20) configured to burst or pierce locally said packaging envelope (4), said puncturing zone (20) communicating with a device (20d, 21, 21a, 22) to recover the liquid flowing through the punctured or pierced part of said packaging envelope (4), the puncturing zone (20) being arranged in the infusion chamber (11) on the same side as the puncturing element (12), and said puncturing zone (20) being arranged at the base as said piercing projection (12), joined to the latter, the water being injected towards the part of the capsule (1) opposed to said puncturing zone so that it can be distributed uniformly throughout the capsule, **characterized by** the fact that:
The infusion chamber (11) is configured to receive a capsule (1) which is spherical in shape, said chamber being formed by a front yoke (11a) and a rear yoke (11b), the rear yoke being movably mounted to move in translation in the base of the machine (10), said yokes having substantially hemispherical extremities adjusted to the shape and dimensions of the capsule.

2. A machine according to previous claim wherein the puncturing zone (20) has a succession of hollow parts (20a) configured to allow the puncturing of the packaging envelope (4) during the injection of pressurized water inside the capsule (1), said hollow and/or upper parts communicating with the device (20d, 21, 21a, 22) to recover the liquid flowing through said packaging envelope.

3. A machine according to claim 1, wherein the infusion chamber (11) contains a puncturing zone (20) equipped with means (20e) for piercing the packaging envelope (4), of the capsule (1), said puncturing means communicating with the device (20d, 21, 21a, 22) to recover the liquid flowing through said packaging envelope.

4. A machine according to claim 3, wherein the means (20e) for piercing the packaging envelope (4) are needles moulded on a grill (20c), said grill being equipped with through-passages (20d) communicating with a recovery chamber (22) for recovering the liquid.

5. A machine according to claim 4, wherein the through-passages (20d) have the shape of a cone frustum having a first width arranged on the side of the puncturing zone (20) and a second, larger width on the side of the recovery chamber (22).

6. A machine according to one of the previous claims, wherein the puncturing element (12) has a needle (120) at one of its ends adapted to pierce the packaging envelope (4) of the capsule (1), the part of said needle designed to penetrate said capsule having water injection orifices (121) in communication with a conduit for pressurized water (122).

7. A machine according to claim 6, wherein the puncturing zone (20) is arranged at the base of the needle (120).

8. A machine according to one of claims 6 or 7 taken in combination with claim 3, wherein the puncturing zone (20) is formed by a grill (20c) moulded at the base of the needle (120), said grill having through-passages (20d) communicating with a recovery chamber (22) said through-passages being arranged under the upper parts (20b).

9. A machine according to claim 8, wherein the through-passages (20d) have the shape of a cone frustum having a first width arranged on the side of the puncturing zone (20) and the second larger width on the side of the recovery chamber (22).

10. A machine according to one of the previous claims, wherein the infusion chamber (11) is formed by a front yoke (11a) and a rear yoke (11b), the rear yoke (11b) being movably mounted between a loading position enabling placement of the capsule (1) in said infusion chamber and a closed position where said rear yoke is positioned with said front yoke to hold said capsule.

11. A machine according to claim 10 taken in combination with claim 8, wherein the front yoke (11a) and the piercing projection (12) are configured to form, behind the puncturing zone (20) a recovery chamber (22) for recovering the liquid flowing through the packaging envelope (4).

12. A machine according to claims 6 or 7 taken in combination with one of the claims 1 to 12, wherein the front yoke (11a) and the puncturing element (12) are arranged to be in a position thereby causing the needle (120) to skewer the capsule (1) on the needle (120) and a position allowing the extraction of said capsule from said needle.

13. A machine according to one of the previous claims taken in combination with claim 6, wherein the needle (120) has a flange (123) configured so that the pierced edges of the packaging envelope (4) have been flattened above so as to be water impermeable under the effect of the pressurized water injected into the capsule (1).

14. A machine according to one of the previous claims, wherein the machine comprises a reservoir (13) for the storage of multiple capsules equipped with an opening (130) enabling the conveyance of said capsules to the infusion chamber (11).

15. A machine according to the previous claims, wherein a conduit (31) to evacuate spent capsuies(1) is arranged in the base (100) to recover said capsules once they have infused.

16. A machine according to claim 15 taken in combination with claim 10, wherein a closing element (31) is arranged with the conduit (30) to evacuate the infused capsules (1), said closing element being movably mounted between a closed position shutting off access to said conduit and a an open position allowing access to said conduit, the movement of said closing element being synchronized with the movement of the rear yoke (11b).
